(19) Europäisches Patentamt
European Patent Office
Office européen des brevets

(11) **EP 1 032 223 B1**

(12) **EUROPÄISCHE PATENTSCHRIFT**

(45) Veröffentlichungstag und Bekanntmachung des Hinweises auf die Patenterteilung:
**30.01.2008 Patentblatt 2008/05**

(51) Int Cl.:
***H04Q 3/00*** *(2006.01)*

(21) Anmeldenummer: **00103534.4**

(22) Anmeldetag: **18.02.2000**

(54) **Signalisierungspunkt eines Signalisierungsnetzes**

Signalling point of a signalling network

Point de signalisation dans un réseau de signalisation

(84) Benannte Vertragsstaaten:
**DE ES FR GB IT SE**

(30) Priorität: **18.02.1999 DE 19906809**

(43) Veröffentlichungstag der Anmeldung:
**30.08.2000 Patentblatt 2000/35**

(73) Patentinhaber: **Nokia Siemens Networks GmbH & Co. KG**
**81541 München (DE)**

(72) Erfinder:
• **Angermayr, Manfred**
**81371 München (DE)**

• **Gradischnig, Klaus David**
**82131 Gauting (DE)**
• **Tüxen, Michael, Dr.**
**81479 München (DE)**

(56) Entgegenhaltungen:
**EP-A- 0 681 405        US-A- 5 848 069**

• **MARKOV Z ET AL: "ANALYSIS OF SIGNALING LOAD SHARING IN FULLY AVAILABLE CCS NO. 7 LINK SET USED IN TELEPHONE NETWORK" AEU INTERNATIONAL JOURNAL OF ELECTRONICS AND COMMUNICATIONS,DE, GUSTAV FISHER VERLAG, JENA, Bd. 52, Nr. 4, 1998, Seiten 279-281, XP000846796 ISSN: 1434-8411**

# EP 1 032 223 B1

## Beschreibung

1. Welches technische Problem soll durch Ihre Erfindung gelöst werden?
2. Wie wurde dieses Problem bisher gelöst?
3. In welcher Weise löst Ihre Erfindung das angegebene technische Problem (geben Sie Vorteile an)?
4. Ausführungsbeispiel(e) der Erfindung.

1. In ZGS7 Netzwerken gemäß ITU-T Empfehlung Q.701 bis Q.706 werden zu sendende Nachrichten anhand eines 4 Bit SLS-Wertes auf die Links des für das Ziel der Nachrichten ausgewählten Linkssets verteilt. In dem Dokument US-A-5848 069 ist eine spezielle Methode zur Verwendung des SLS-Wertes für die genannte Verteilung offenbart.

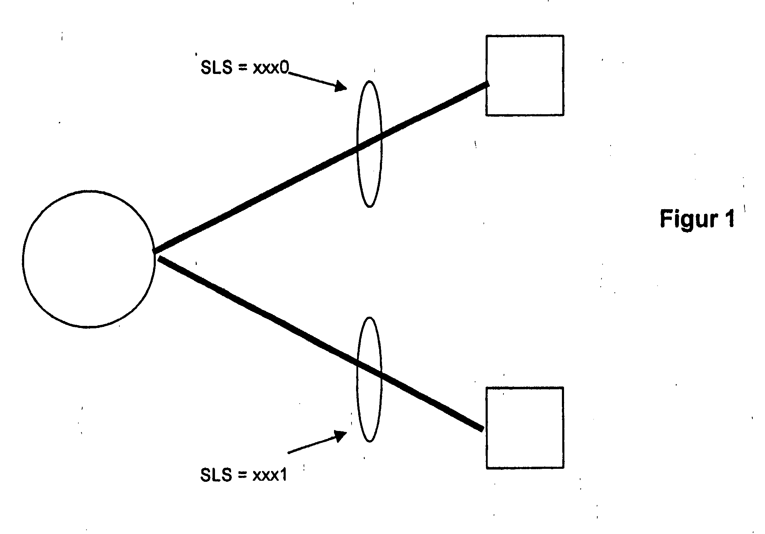

Wird der Verkehr zu einem Ziel über zwei (oder mehr) Linksets verteilt, so wird in Q.704 und Q.705 festgelegt, dass dafür ein (oder mehr) Bit(s) des SLS Wertes verwendet wird (werden), um zuerst den Linkset auszuwählen (Fig. 1) und anschließend mit dem SLS Wert den Link innerhalb des gewählten Linksets. (Um also eine gleichmäßige Lastverteilung im Zeichengabenetz (Signalisierungsnetz) zu ermöglichen, müssen die SLS Werte von den Anwendern des MTP möglichst gleichmäßig an die auszusendenden Nachrichten vergeben werden.)

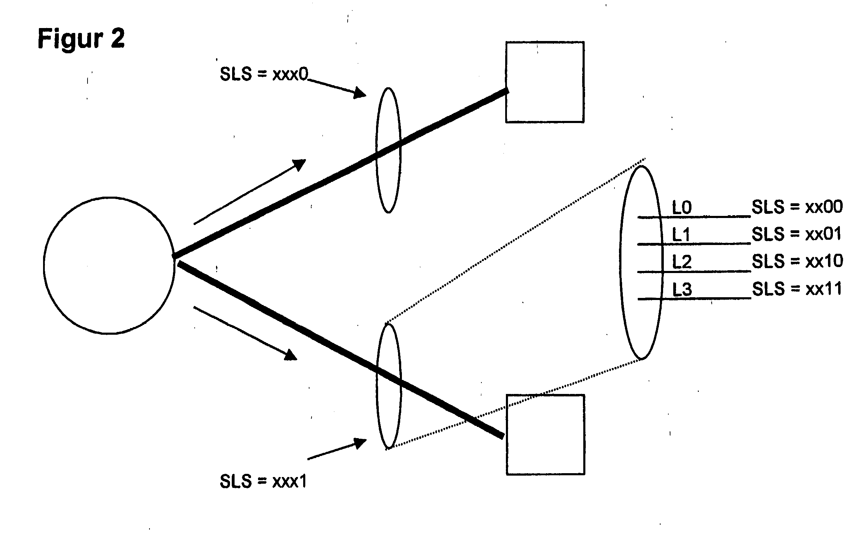

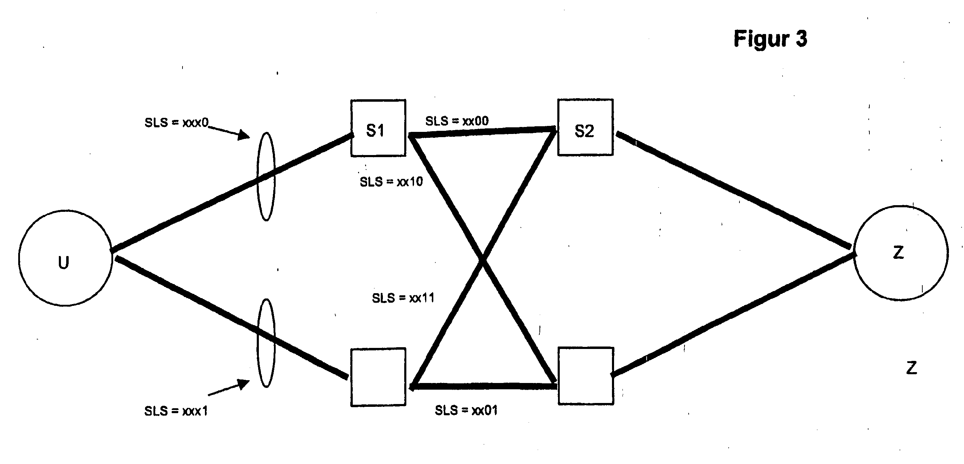

Dabei tritt das Problem auf, dass, nachdem ein Linkset anhand eines oder mehrerer Bits des SLS Wertes ausgewählt wurde, die SLS Werte der über diesem Linkset zu dem gegebenen Ziel gesendeten Nachrichten ggf. nicht mehr gleich verteilt sind. Z.B. werden dann über einen Linkset nur noch Nachrichten mit geraden (ungeraden) SLS Werten gesendet (Fig. 1). Besonders problematisch wird diese Ungleichverteilung, wenn dadurch viele oder alle Nachrichtenströme, welche ein bestimmtes Linkset benutzen, davon betroffen sind und man für alle diese Nachrichtenströme dasselbe Bit des SLS Wertes und den gleichen Wert dieses Bits zur Auswahl des Linksets verwendet. Sind in diesem Linkset dabei nämlich die SLS Werte gleichmäßig auf die Links verteilt (z.B. alle geraden SLS Werte auf Links L0 und L2, alle ungeraden auf L1 und L3, siehe Fig. 2) kann es zu (extremen) Schieflasten in diesem Linkset kommen. Diese Situation tritt insbesondere dann auf, wenn die Struktur des Zeichengabenetzes eine regelmäßige ist und sog. Standalone STPs eingesetzt werden (Fig. 3). Dabei kann die Situation auftreten, daß z.B. STP S1 beim Weiterleiten von Nachrichten zum Ziel Z nur noch 3 Bit des SLS Wertes zur Auswahl des Linksets und nur noch zwei Bits des SLS Wertes zur Auswahl des Links in einem Linkset zur Verfügung hat. In den STPs tritt selbst dann noch das Problem einer Ungleichverteilung der SLS Werte auf, wenn die ankommenden Nachrichten nur noch über einen einzigen Linkset (z.B. den direkten zum Ziel des Nachrichtenstroms) weitergeleitet werden.

Generell gilt, daß bei Loadsharing über z.B. 2 Linksets dasjenige Bit des SLS Wertes (wenn dieses Bit für alle bzw. eine nicht zu vernachlässigende Anzahl aller Nachrichten dasselbe ist), welches zur Auswahl des Linksets benutzt wird, in dem Knoten X, der diese Auswahl trifft, nicht mehr zur Auswahl des Links im ausgewählten Linkset verwendet werden kann. Im nächsten Knoten Y darf dieses Bit dann weder zur Auswahl eines Linksets noch eines Links in einem Linkset verwendet werden, wenn alle bzw. eine nicht zu vernachlässigende Anzahl aller Knoten, welche Nachrichten zu Y zur Weiterleitung routen, genau dieses Bit in gleicher Weise zur Auswahl des Linksets benutzt haben.

Hingegen ist es einem nachfolgenden Knoten egal, welche Bits des SLS Feldes ein Vorgängerknoten zur Auswahl der Links innerhalb eine Linksets verwendet hat.

2. In Netzwerken gemäß ANSI T1.111 werden diese Probleme dadurch gelöst, daß einerseits SLS Felder mit mehr Bits verwendet werden (5 bzw. neuerdings 8) und es eine definierte Prozedur (SLS-Rotation) gibt, mit der sichergestellt wird, daß STPs effektiv unterschiedliche Bitpositionen zur Auswahl des Linksets verwenden und dieses Bit im nachfolgenden STP weder zur Auswahl eines Links noch eines Linksets herangezogen wird (siehe ANSI T1.111 1996, T1.111.5, §7.3.1). Diese Lösung läßt sich jedoch in Netzen gemäß Q.701 bis Q.707 nachträglich nicht bzw. auf Grund der nur 4 Bit langen SLS Werte nur beschränkt und mit großem Aufwand einführen.

In Netzen gemäß Q.701 bis Q.707 besteht nun eine Lösungsmöglichkeit darin, daß einerseits in einem Knoten administrativ festgelegt werden kann, welches Bit zur Auswahl des Linksets verwendet werden kann. Dies wird in der Q.705 (Annex A, A.3.2 Routing in the absence of failures) so vorgeschlagen und z.B. von EWSD so realisiert. Ergänzend dazu muß andererseits auch festgelegt werden, welche Bits zur - Auswahl des Links innerhalb eines Linksets verwendet bzw. nicht verwendet werden (dies ist in den ITU Recommendation nicht so festgelegt bzw. gefordert).
Der wesentliche Nachteil dieser Methode ist, daß die Auswahl der Bits, die noch zur Auswahl von Links bzw. Linksets in einem Knoten verwendet werden können, wenn eine gleichmäßige Lastverteilung erreicht werden soll, von der in anderen Knoten getroffenen Wahl abhängt. Daher muß diese Auswahl in allen betroffenen Knoten koordiniert werden, was selbst dann, wenn alle Knoten dem selben Betreiber gehören, einen erheblichen Planungsaufwand erfordert. Sind Knoten unterschiedlicher Betreiber beteiligt, wird diese Koordination wesentlich schwieriger und ist in der Praxis oft nicht vorhanden. Zusätzlich hat diese Methode (wie auch die zuvor erwähnte Methode bei ANSI, angewandt auf 4 Bit lange SLS Werte) das Problem, daß u.U. der 2. STP in Serie zur Auswahl von Links in einem Linkset nur noch 2 Bits zur Verfügung hat und den Verkehr dadurch nur noch über maximal 4 Links verteilen kann.

Generell tritt dieses Problem auch in sog. Signaling End POints (SEP) auf, wenn diese lokal erzeugten Verkehr über wenigstens zwei Linksets im Lastteilungsverfahren (d.h. über Combined Linksets -- CLS) versenden. Auch dann stehen für das Loadsharing innerhalb der zum CLS gehörenden Linkset normalerweise weniger als 4 Bits zur Verfügung.

3. Die vorliegende Erfindung löst diesen Problembereich nun dadurch, daß ein Signalisierungspunkt unter Heranziehung von in einer Nachrichten enthaltenen Informationen (mit Ausnahme des SLS-Wertes) und/oder mit der Nachricht assoziierter Informationen einen Linkauswahlwert erzeugt und diesen Linkauswahlwert zur Bestimmung des Links, über den er die Nachricht an den nächsten Signalisierungspunkt weiterleitet, heranzieht.

Eine Ausführungsform der Erfindung besteht darin, daß ein Signalisierungspunkt zusätzlich den in einer weiterzuleitenden Nachricht enthaltenen SLS-Wert zur Erzeugung des Linkauswahlwerts mit heranzieht, indem er empfangene bzw. lokal erstellte SLS Werte mit statistisch möglichst gleichverteilten Werten derart überlagert, daß die Verteilung der modifizierten SLS Werte höchstens "besser" ist, als die ursprüngliche SLS Verteilung. Die zur Modifikation herangezogen, statistisch möglichstgleichverteilten Werte werden dabei über eine Funktion gewonnen, die als Eingangsgrößen in den Nachrichten enthaltene (z.B. Adreßfelder (OPC- Originating Point Code bzw. DPC - Destination Point Code - siehe Anhang 1 und Anhang 2) Informationen oder mit ihr assoziierte Informationen (z.B. die Identität des Linksets, auf dem eine Nachricht empfangen wurde) verwendet.

Die Funktion generiert z.B. aus dem OPC und/oder DPC vier Bits, welche zur Modifizierung des SLS Wertes verwendet werden. Die Funktion kann dabei von dem in dem Signalisierungsnetz verwendeten Numerierungsplan und/oder von in einzelnen Knoten zufälligen aber einmalig festgelegten Parametern, wie z.B. dem Pointcode eines Knotens, abhängen. Der SLS Wert wird nun so modifiziert, daß diese vier Bits mit dem SLS Wert mittels einer XOR Funktion verknüpft werden. Einzige Voraussetzung dafür, daß diese Methode eine Verbesserung (bzw. keine Verschlechterung) der SLS Verteilung ergibt, ist dabei nur, daß die Verteilung der SLS Werte von der Verteilung der 4 Bits unabhängig ist. Die mathematische Beschreibung dieser Aussage findet sich in Anhang 3.

Diese Methode eignet sich insbesondere zur lokalen Behebung von Ungleichverteilungen der SLS Werte in einem STP und insbesondere dann, wenn die in Vorgängerknoten getroffenen Entscheidungen bzgl. der Verwendung von SLS Bits zur Auswahl von Linksets nicht bekannt sind. Ebenso ist diese Methode vorteilhaft für STP Verkehr, welcher mit ungleichverteilten SLS Werten ankommt und über nur einen Linkset, z.B. direkt zum Ziel, weitergeleitet wird.

Wie im Ausführungsbeispiel gezeigt, läßt sich diese Methode auch dahingehend erweitern, daß man eine 5 Bit langen modifizierten SLS Wert berechnet.

Verwenden zwei STPs in Serie diese Prozedur, muß dies abgestimmt sein, z.B. in einer der folgenden Weisen:

a) Der ursprüngliche SLS Wert bleibt erhalten. Zur Auswahl des Linksets wird ein Bit des ursprünglichen SLS Wertes verwendet, zur Auswahl des Links wird der modifizierte SLS Wert herangezogen. Dabei muß jedoch die Auswahl des Bits, welches zur Linksetauswahl verwendet wird, in aufeinanderfolgenden STPs koordiniert werden. Alternative kann der modifizierte SLS Wert zur Auswahl des Linksets und der ursprüngliche zur Auswahl des Links verwendet werden.

b) Der ursprüngliche SLS Wert wird durch den modifizierten SLS Wert ersetzt. Zur Auswahl des Linksets wird ein Bit des ursprünglichen SLS Wertes verwendet, zur Auswahl des Links wird der modifizierte SLS Wert herangezogen. Hier ist zu beachten, daß man in Zeichengabenetzen gemäß ITU-T Q.701 bis Q.706 nicht bei allen Nachrichten (gewissen MTP Netzwerkmanagement Nachrichten und den meisten Nachrichten des Telephone User Parts (TUP), siehe Q.721 bis Q.725) den SLS Wert modifizieren darf; ebenso müssen Nachrichten, welche die in Q.704, §5, beschriebene sog. Retrieval Prozedur unterlaufen, speziell behandelt werden. Diese Ausnahmen sind i.a. für eine gute Lastverteilung aber höchstens dann von Bedeutung, wenn ein wesentlicher Verkehrsanteil auf den TUP entfällt oder die erwähnten Netzwerkmanagement Nachrichten fällt.

In einem STP kann dabei dann eine "gute" Verteilung zwischen Linksets der weitergeleiteten Nachrichten erzielt werden, wenn entweder die ankommen SLS Werte gleichmäßig verteilt sind oder aber bekannt ist und berücksichtigt wird, welche(s) Bit(s) von den vorangehenden Knoten zur Auswahl von Linksets "verbraucht" wurde(n). Unabhängig wird durch die Anwendung dieser Methode in einem STP jedoch erreicht, daß für nachfolgende STPs der an sie weitergeleitete Verkehr eine möglichst gute SLS Verteilung besitzt.

c) Eine weitere vorteilhafte Methode, eine administrative Koordination der Auswahlfunktionen in unterschiedlichen Knoten zu vermeiden, ist es, diese Auswahlfunktionen in den einzelnen Knoten über automatisch unterschiedliche Parameter zu steuern, z.B. durch den Signalling Point Code des eigenen Knotens, so daß identische Nachrichten in unterschiedlichen Knoten unterschiedliche modifizierte SLS Werte erhalten.

Es ist zu bemerken, daß eine Koordination der Auswahlfunktionen über mehr als 2 Knoten in Serie oft nicht notwendig ist, da in regelmäßigen Netzwerktopologien wie in Fig. 3 dargestellt, im dritten Knoten (S2 in Fig. 3) das vom ersten Knoten (U in Fig. 3) zur Auswahl des Linksets verwendete Bit wieder gleichverteilt ist.

Wesentliche Vorteile einzelner dieser Methoden gegenüber dem Stand der Technik sind:

i) Verringerung des lokalen Administrationsaufwandes, da nicht mehr festgelegt werden muß, welche Bits zur Auswahl des Links in einem Linkset verwendet werden können.

ii) Eine lokale (d.h. z.B. in einigen wenigen Knoten) Einführung ist möglich und erzielt neben lokalen Verbesserungen der Lastverteilung auch Verbesserungen in nachfolgenden Knoten.

iii) Unabhängig von der Verteilung der ankommenden SLS Werte können in abgehenden Linksets alle bis zu den maximal möglichen 16 Links mit guten Lastverteilungen verwendet werden.

Durch die Erfindung ist es möglich, die SLS Verteilung der in Zeichengabepunkten mit STP Funktionen erhaltenen Nachrichten zu modifizieren, ohne die vom MTP geforderte Einhaltung der Reihenfolge von Nachrichtenströmen zu verletzen. Diese Modifikation kann dabei unabhängig von der tatsächlichen SLS Verteilung derart erfolgen, daß die neue Verteilung höchstens besser sein kann.

4. Eine mögliche Ausführung der Erfindung ist wie folgt:

Seien O=(o1,...,o14),D=(d1,...,d14), P=(p1,...,p14) der OPC und DPC einer Nachricht bzw. der Pointcode des Knotens und sei S = (s1,...,s4) der SLS Wert einer Nachricht in binärer Notation. + stelle im Folgenden die Exklusive ODER Verknüpfung (XOR) -- d.h. die Addition auf der Gruppe der Bitvektoren -- dar. Sei k zufällig aus der Menge {0,1} bei der Erstinstallation des Knotens unabhängig von P festgelegt. Dann wird ein 5 Bit langer modifizierter SLS Wert Sm = (sm1,...,sm5) wie folgt berechnet:

$$M = (m1,...,=m14) = O+D+P$$

$$Sm = (S,0)+(m1,...,m5)+(m6,...,m10)+(m11,...,m14,k)$$

Ist ein Linkset auszuwählen, wird sm5 dafür verwendet. Für die Auswahl der Links wird (sm1,...,sm4) verwendet.

## <u>Anhang 1</u>

Verfahren zur Lastverteilung

1. Welches technische Problem soll durch Ihre Erfindung gelöst werden?
2. Wie wurde dieses Problem bisher gelöst?
3. In welcher Weise löst Ihre Erfindung das angegebene technische Problem (geben Sie Vorteile an)?
4. Worin liegt ein erfinderischer Schritt?
5. Ausführungsbeispiel(e) der Erfindung.

1. Gleichmäßigkeit der Lastverteilung auf die einzelnen Links eines Linksets im MTP des ZGS#7. Eine Gleichmäßigkeit ist u.a. erforderlich, da im MTP Linkset-bezogene Congestion-Kontrollmethoden zur Anwendung kommen und der am meisten belastete Link diese Kontrollen ggf. auslöst und dadurch eine höhere Auslastung der anderen Links behindert bzw. unmöglich macht.

2. Bisher werden für die Lastverteilung die 4 Bit (gemäß ITU) oder 5 bzw 8 Bit (gemäß ANSI) des SLS (Signaling Link Selection) Feldes verwendet. Sowohl ITU als ANSI gehen davon aus, daß die möglichen SLS Werte statistisch (in etwa) gleichverteilt sind, was die Benutzer des MTP sicherstellen müssen. Bei ITU ist damit nur eine Aufteilung in sechzehntel Anteile des Gesamtverkehrs möglich. Wie leicht zu sehen ist, wird daher bei ansonst gleichem Verkehr z.B. der höchstbelastete Link in einem Linkset mit 5 Links genauso belastet sein wie der in einem Linkset mit nur 4 Links, der Linkset mit 5 Links also keine höhere verwendbare Kapazität haben als ein Linkset mit nur 4 Links. Die ANSI Lösungen mit 5 bzw. 8 Bits SLS Länge haben daher beträchtliche Vorteile, sind aber aufgrund der unterschiedlichen Nachrichtenformate in ITU-gemäßen MTP Netzen nicht anwendbar und könnten nur bei einer praktisch nicht möglichen Umstellung des gesamten betroffenen MTP Netzes (einschließlich aller Implementierungen des MTP und seiner Anwender) eingesetzt werden.

3. Die vorliegende Erfindung verwendet zusätzlich zum SLS Feld auch die Adreßfelder (OPC- Originating Point Code bzw. DPC - Destination Point Code) der MTP Nachrichten zur Lastverteilung, indem eine Funktion aus dem OPC und/oder DPC eine Anzahl zusätzlicher Bits generiert, welche zusammen mit dem SLS Feld zur Lastverteilung verwendet werden. Die verwendete Funktion kann dabei von der Lage des jeweiligen Knotens im MTP-Netz, von der vom MTP-Netzbetreiber verwendeten Numerierungstrategie oder auch von der von ihm gewünschten Granularität der Lastverteilung abhängen.

4. Ein wesentlicher erfinderischer Schritt besteht darin, daß eine Verbesserung der Lastverteilung lokal wo erforderlich (d.h. z.B. in einem einzigen Knoten, etwa in einem STP - Signaling Transfer Point) ohne Interworking bzw. Kompatibilitätsprobleme und ohne Änderungsaufwand für die MTP Anwender durch die Verwendung bereits vorhandenen Informationen (d.h. den Adressinformationen), welche mit Ausnahme von rein assozieierten Verkehrsbeziehungen die nötige Variabilität aufweisen, erreicht werden kann. Ein anderer wesentlicher Schritt liegt in der (möglichen) Kombination von OPC und DPC zur Erhöhung der Variabilität der angenommen Werte.

5. Eine mögliche Ausführung der Funktion ist z.B. die exklusive Oder-Verknüpfung der beiden niedrigst-wertigen Bits von OPC und DPC. Dadurch wird im Idealfall eine Granularität der Lastverteilung von 64-stel erreicht. Die exklusive Oder-Verknüpfung macht die Variabilität der Funktion unabhängig davon, ob sie zielnahe (größere Variabilität des OPC) oder ursprungsnahe (größere Variabilität des DPC) erfolgt.

**Anhang 2 :**

Verfahren zur kompatiblen Einführung einer verbesserten Lastverteilung

1. Welches technische Problem soll durch Ihre Erfindung gelöst werden?
2. Wie wurde dieses Problem bisher gelöst?
3. In welcher Weise löst Ihre Erfindung das angegebene technische Problem (geben Sie Vorteile an)?
4. Worin liegt ein erfinderischer Schritt?
5. Ausführungsbeispiel(e) der Erfindung.

1. In ZGS7 Netzwerken gemäß ANSI T1.111-1996 werden die Nachrichten anhand eines 8 Bit SLS-Wertes auf die Links eines Linkssets verteilt. In älteren Versionen des Standards T1.111 werden nur 5 Bit SLS- Werte festgelegt. Beide Methoden müssen über eine u.U. lange Zeit in ANSI ZGS7 Netzen (z.B. im nordamerikanischen ZGS7 Netzwerk) miteinander kooperieren. Dabei stellen sich zwei Probleme: a) wie verhält sich ein Zeichengabepunkt, welcher nur 5- Bit SLS Werte verwendet, wenn er eine Nachricht mit einem 8 Bit SLS Wert erhält; und b) wie verhält sich ein Zeichengabepunkt, welcher 8-Bit SLS Werte verwendet, wenn er eine Nachricht mit einem 5 Bit SLS Wert erhält. Dabei stellt sich insbesondere das Problem, daß solche Nachrichten, wenn sie in diesem Zeichengabepunkt weitergeleitet werden, trotz des kurzen SLS-Wertes möglichst gleichmäßig auf die Links eines Linksets verteilt werden. Damit verbunden ist aber auch das Problem, wie der Zeichengabepunkt erkennen kann, daß diese Nachrichten nur einen 5-Bit SLS-Wert verwenden, da zwischen einer solchen Nachricht und einer, bei der zwar die 8 Bits verwendet werden, die drei extra Bits jedoch Null sind, nicht unterschieden werden kann.
Gegenstand der vorliegenden Erfindung ist eine vorteilhafte Lösung des Problems b)
2. Bisher ist in der Literatur (z.B. Bellcore GR-606-CORE, 1996) nur eine Lösung für das erste Problem (a) bekannt. Diese besagt, daß Zeichengabepunkte, welche nur 5 Bit SLS Werte verwenden, die verbleibenden 3 Bits beim Erzeugen einer Nachricht auf Null zusetzen und beim Empfang zu ignorieren haben. Dies ist die normale Methode, wie in ZGS7 Netzen Kompatibilität hergestellt wird.
Ein Lösungsmöglichkeit für das zweite Problem (b) ist, eine Verteilung der SLS Werte auf die Links eines Linksets zu finden, sodaß die Verteilung möglichst gleichwertig ist, unabhängig davon, ob die verwendeten SLS Werte nun 5 oder 8 Bit lang sind. Verteilungen mit solcher Eigenschaft lassen sich finden, doch ist es unklar, ob sie sich auch nach Linkausfällen bzw. Linkrestaurierungen herstellen lassen, ohne daß es zu eigentlich nicht notwendigen Verlagerungen von durch SLS-Werte definierten Verkehrsströmen kommt. Auch dürften Methoden, solche speziellen Verteilungen zu berechnen, relativ komplex sein.
Eine andere Lösungsmöglichkeit für das zweite Problem (b) ist es, jeweils zwei Verteilungen der SLS-Werte zu definieren, eine für Nachrichtren mit 5-Bit SLS Werten, eine andere für Nachrichten mit 8-Bit SLS-Werten. Neben der größeren Komplexität, jeweils zwei Verteilungen zu behandeln, stellt sich hier das Problem, wie der Zeichengabepunkt erkennen kann, daß diese Nachrichten nur einen 5-Bit SLS-Wert verwenden, da zwischen einer solchen Nachricht und einer, bei der zwar die 8 Bits verwendet werden, die drei extra Bits jedoch Null sind, nicht unterscheiden werden kann. Wenn diese Nachrichten von direkt benachbarten Zeichengabepunkten stammen, läßt sich dies noch durch einfache administrative Maßnahmen festlegen. Wenn diese Nachrichten jedoch von irgendwo im ZGS7 Netz kommen können, wird eine Adminstration dieser Information aufwendig.

Beide Lösungen haben ferner den Nachteil, daß die Lastverteilung der Nachrichten mit 5-Bit SLS-Werten nicht verbessert wird.

3. Die vorliegende Erfindung löst das zweite Problem nun dadurch, daß sie nun bei Nachrichten, welche nur 5 Bit-SLS Werte verwenden, den SLS Wert auf 8 Bit erweitert, indem die fehlenden 3 Bits ergänzt werden. Dazu verwendet man zusätzliche, in den Nachrichten enthaltene Informationen (z.B. Adreßfelder (OPC- Originating Point Code bzw. DPC - Destination Point Code - siehe Anhang 1), indem eine Funktion z.B. aus dem OPC und/oder DPC 3 zusätzliche Bits generiert, welche zur Erweiterung SLS Feld verwendet werden. Die verwendete Funktion kann dabei z.B. von der Lage des jeweiligen Knotens im MTP-Netz, von der vom MTP-Netzbetreiber verwendeten Numerierungstrategie oder auch von der von ihm gewünschten Granularität der Lastverteilung abhängen. Zu bemerken ist, daß diese Methode vorteilhaft auch mit der oben angeführten ersten Lösungsmöglickeit für das zweite Problem kombiniert werden könnte, da dann die Auswirkung etwaiger auftretender Schiefverteilungen minimiert würde.

Wesentliche Vorteile dieser Methode gegenüber den oben aufgeführten sind:

a) die Qualität der Lastverteilung von Nachrichten mit 5 Bit SLS Werten entspricht im wesentlichen der von Nachrichten mit 8-Bit SLS-Werten

b) all von einem mit dieser Funktion ausgestatteten STP abgehenden Nachrichten verwenden 8-Bit SLS Werte

c) ist diese Funktion genügend in einem ZGS7 Netz verbreitet, dann wird eine Adminsitration, ob ein Zeichengabepunkt 5-Bit oder 8-Bit SLS Werte verwendet, nut noch für direkt mit einem STP verbundene Knoten notwendig

d) selbst wenn die Adminstrationsdaten nicht up-to-date sind, d.h. wenn Nachrichtenursprungsknoten als "5-Bit SLS Knoten" gekennzeichnet sind, stellt dies kein Problem dar, da durch die vorliegende Erfindung die extra 3 Bits nur geändert würden, trotzdem aber die vorteilhafte 8-Bit Lastverteilung zur Anwendung kommt.

4. Der wesentliche erfinderische Schritt besteht darin, daß es möglich ist, in Zeichengabepunkten mit STP Funktionen, erhaltene Nachrichten mit nur 5-Bit SLS Werten auf 8 Bit SLS Werte zu erweitern.

5. Eine mögliche Ausführung der Funktion ist z.B. die exklusive Oder-Verknüpfung der drei niedrigst-wertigen Bits von OPC und DPC und das Einfügen des Ergebnisses in das SLS-Feld der relevanten Nachrichten. Die exklusive Oder-Verknüpfung macht die Variabilität der Funktion unabhängig davon, ob sie zielnahe (größere Variabilität des OPC) oder ursprungsnahe (größere Variabilität des DPC) erfolgt.

Anhang 3

Sei G eine endliche Menge, f, f', f'' Zähldichten auf G.

Dann bezeichne d(f) = min {f(g), g aus G} den unteren Grad der Gerechtigkeit,

= max {f(g), g aus G} den oberen Grad der Gerechtigkeit der Verteilung zu f.

Es gilt also: 0 <= d(f) <= 1/(#G) <= D(f) <= 1.

Ferner heiße die Verteilung zu f ungerecht bzw. gerecht, falls d(f)=0 bzw. d(f)=1/(#G) gilt. Es gibt damit genau eine gerechte Verteilung, nämlich die Gleichverteilung.

Die Verteilung zu f' heißt nicht ungerechter als die Verteilung zu f'', falls d(f) >= d(f') und D(f) <= D(f'). Gelten sogar beide Ungleichungen strikt, so heißt die Verteilung von f gerechter als die Verteilung von f'.

Damit zeigt man leicht:

Sei G eine endliche Gruppe und X', X'' zwei unabhängige Zufallsvariablen mit Werten in G. Dann gilt:

1. Die Verteilung von X'+X'' ist nicht ungerechter als die von X' und als die von X''.
2. Ist X' nicht gerecht und X'' nicht ungerecht, so ist X'+X'' gerechter als X'.

**Patentansprüche**

1. Signalisierungspunkt eines Signalisierungsnetzes, der Nachrichten generiert und/oder bezüglich einer Weiterleitung bearbeitet, wobei die Nachrichten

- ein Adressen-Feld aufweisen, dessen Wert er zur Ermittlung des nächsten Signalisierungspunkts, an den er eine empfangene oder selbst generierte Nachricht weiterleitet, heranzieht, und
- ein SLS-Feld aufweisen, dessen Wert zur Ermittlung des Links, über den er die Nachricht an den nächsten Signalisierungspunkt weiterleitet, vorgesehen ist,

**dadurch gekennzeichnet,**

**daß** er unter Heranziehung von in einer Nachricht enthaltenen Informationen, die nicht den SLS-Wert umfassen, und/oder mit der Nachricht assoziierter Informationen einen Linkauswahlwert erzeugt und diesen Linkauswahlwert zur Bestimmung des Links, über den er die Nachricht an den nächsten Signalisierungspunkt weiterleitet, heranzieht.

2. Signalisierungspunkt nach Anspruch 1,
   **dadurch gekennzeichnet,**
   **daß** er den in weiterzuleitenden Nachrichten enthaltenen SLS-Wert zusätzlich zur Erzeugung des Linkauswahlwerts mit heranzieht, indem er den zunächst nach Anspruch 1 erzeugten Linkauswahlwert mit dem SLS Wert überlagert.

3. Signalisierungspunkt nach Anspruch 2,
   **dadurch gekennzeichnet**,
   er den SLS Wert mit dem nach Anspruch 1 erzeugten Wert überlagert, indem er die Bits des SLS Wertes mit den Bits des nach Anspruch 1 generierten Wertes mittels einer XOR Funktion verknüpft.

4. Signalisierungspunkt nach einem der Ansprüche 1 bis 3,
   **dadurch gekennzeichnet,**
   **daß** die Erzeugung des Linkauswahlwerts von dem in dem Signalisierungsnetz verwendeten Numerierungsplan und/oder von in einzelnen Signalisierungspunkten zufälligen aber einmalig festgelegten Parametern, wie z.B. dem Pointcode eines Signalisierungspunktes, abhängt.

5. Signalisierungspunkt nach einem der Ansprüche 1 bis 4,
   **dadurch gekennzeichnet,**
   **daß** er den in weiterzuleitenden Nachrichten enthaltenen SLS-Wert zur Bestimmung des Linksets, über den er die Nachricht an den nächsten Signalisierungspunkt weiterleitet, heranzieht.

6. Signalisierungspunkt nach einem der Ansprüche 1 bis 6
   **dadurch gekennzeichnet,**
   **daß** er den Linkauswahlwert als SLS-Wert in eine weiterzuleitende oder selbst erzeugte Nachricht einträgt.

**Claims**

1. Signalling point of a signalling network which generates messages and/or processes such messages with respect to forwarding, wherein the messages

   - have an address field, the value of which it uses for determining the next signalling point, to which it forwards a message received or self-generated, and
   - have an SLS field, the value of which is provided for determining the link via which it forwards the message to the next signalling point,

   **characterized**
   **in that**, utilizing information contained in a message which does not comprise the SLS value and/or information associated with the message, it generates a link selection value and utilizes this link selection value for determining the link via which it forwards the message to the next signalling point.

2. Signalling point according to Claim 1,
   **characterized**
   **in that** it additionally utilizes the SLS value, contained in messages to be forwarded, for generating the link selection value in that it superimposes the SLS value on the link selection value first generated according to Claim 1.

3. Signalling point according to Claim 2,
   **characterized**
   **in that** it superimposes the value generated according to Claim 1 on the SLS value in that it combines the bits of the SLS value with the bits of the value generated according to Claim 1 by means of an XOR function.

4. Signalling point according to one of Claims 1 to 3,
   **characterized**

**in that** the generation of the link selection value depends on the numbering plan used in the signalling network and/or on parameters which are random in individual signalling points but are specified uniquely, such as, e.g. the point code of a signalling point.

**5.** Signalling point according to one of Claims 1 to 4,
**characterized**
**in that** it utilizes the SLS value contained in messages to be forwarded for determining the linkset via which it forwards the message to the next signalling point.

**6.** Signalling point according to one of Claims 1 to 5,
**characterized**
**in that** it enters the link selection value as SLS value in a message to be forwarded or self-generated.

**Revendications**

**1.** Point de signalisation d'un réseau de signalisation, qui génère des messages et/ou les traite en ce qui concerne un acheminement, les messages

- présentant un champ d'adresse dont il se sert de la valeur pour déterminer le point de signalisation suivant auquel il achemine un message reçu ou un message qu'il a généré lui-même, et
- présentant un champ SLS dont la valeur est prévue pour déterminer la liaison par l'intermédiaire de laquelle il achemine le message au point de signalisation suivant,

**caractérisé en ce**
**qu'**en se servant d'informations contenues dans un message, qui ne comprennent pas la valeur SLS, et/ou en ce qu'avec des informations associées au message, il génère une valeur de sélection de liaison et se sert de cette valeur de sélection de liaison pour déterminer la liaison par l'intermédiaire de laquelle il achemine le message au point de signalisation suivant.

**2.** Point de signalisation selon la revendication 1,
**caractérisé en ce**
**que**, en plus de la génération de la valeur de sélection de liaison, il se sert de la valeur SLS contenue dans des messages à acheminer, du fait qu'il superpose la valeur de sélection de liaison, générée d'abord selon la revendication 1, avec la valeur SLS.

**3.** Point de signalisation selon la revendication 2,
**caractérisé en ce**
**qu'**il superpose la valeur SLS avec la valeur générée selon la revendication 1, du fait qu'il relie les bits de la valeur SLS aux bits de la valeur générée selon la revendication 1 au moyen d'une fonction XOR.

**4.** Point de signalisation selon l'une quelconque des revendications 1 à 3,
**caractérisé en ce**
**que** la génération de la valeur de sélection de liaison dépend du plan de numérotation utilisé dans le réseau de signalisation et/ou de paramètres déterminés de manière aléatoire mais unique dans des points de signalisation individuels, comme par ex. le code de point d'un point de signalisation.

**5.** Point de signalisation selon l'une quelconque des revendications 1 à 4,
**caractérisé en ce**
**qu'**il se sert de la valeur SLS contenue dans des messages à acheminer pour déterminer l'ensemble de liaisons par l'intermédiaire duquel il achemine le message au point de signalisation suivant.

**6.** Point de signalisation selon l'une quelconque des revendications 1 à 5,
**caractérisé en ce**
**qu'**il inscrit la valeur de sélection de liaison en tant que valeur SLS dans un message à acheminer ou dans un message qu'il a généré lui-même.

SLS = xxx0

SLS = xxx1

**Figur 1**

Figur 2

**Figur 3**

SLS = xxx0

SLS = xx00

S1

S2

SLS = xx10

U

SLS = xx11

Z

SLS = xxx1

SLS = xx01

Z

EP 1 032 223 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5848069 A